# EUROPÄISCHE PATENTSCHRIFT

(11) **EP 3 455 868 B1**
(45) Veröffentlichungstag und Bekanntmachung des Hinweises auf die Patenterteilung: **18.03.2020**
(21) Anmeldenummer: 17722799.8
(22) Anmeldetag: 11.05.2017
(51) Int. Cl.: H01H 13/85, G06F 3/01

(54) **ELEKTROMAGNETISCHER FEEDBACK-AKTUATOR FÜR EIN BEDIENELEMENT UND ANORDNUNG MIT MINDESTENS EINEM ELEKTROMAGNETISCHEN FEEDBACK-AKTUATOR**
ELECTROMAGNETIC FEEDBACK ACTUATOR FOR AN OPERATING ELEMENT AND ARRANGEMENT HAVING AT LEAST ONE ELECTROMAGNETIC FEEDBACK ACTUATOR
ACTIONNEUR DE RÉTROACTION ÉLECTROMAGNÉTIQUE POUR ÉLÉMENT DE COMMANDE ET DISPOSITIF ÉQUIPÉ D'AU MOINS UN ACTIONNEUR DE RÉTROACTION ÉLECTROMAGNÉTIQUE

(30) Priorität: 14.05.2016 DE 102016005926
(43) Veröffentlichungstag der Anmeldung: 20.03.2019
(73) Patentinhaber: Leopold Kostal GmbH & Co. KG, 58513 Lüdenscheid (DE)
(72) Erfinder: BLECKMANN, Michael, 58239 Schwerte-Ergste (DE); LEXOW, Carl Christian, 10150 Feuges (FR); KLAGGES, Daniel, 58454 Witten (DE); BRENSEL, Kai, 58454 Witten (DE)
(74) Vertreter: Kerkmann, Detlef
(86) Internationale Anmeldenummer: PCT/EP2017/061341
(87) Internationale Veröffentlichungsnummer: WO 2017/198542

(56) Entgegenhaltungen:
- EP-A2- 2 802 965
- DE-A1-102013 006 414
- DE-T5-112013 003 425

## Beschreibung

Die Erfindung betrifft einen elektromagnetischen Feedback-Aktuator für ein Bedienelement mit mindestens einem Betätigungselement, wobei der Feedback-Aktuator zumindest einen aus einer Magnetspule und einem Magnetkern bestehenden Elektromagneten, sowie einen gegen den Elektromagneten beweglichen Magnetanker aufweist, wobei der Magnetanker mechanisch mit dem Bedienelement koppelbar ist, um bei einer Berührung oder Druckbetätigung eines Betätigungselements mindestens einen Kraftimpuls an das Bedienelement zu geben. Die Erfindung betrifft außerdem eine Anordnung mit mindestens einem derartigen elektromagnetischen Feedback-Aktuator.

Bedienanordnungen von elektrischen Geräten, besonders solche, die berührungssensitive Betätigungsflächen tragen, weisen oftmals Einrichtungen zur haptischen Rückmeldung einer Betätigung an den Benutzer auf. Die Signalisierung erfolgt dabei üblicherweise über mindestens einen an die Betätigungsfläche übertragenen Kraftimpuls. Zu dessen Erzeugung wird etwa ein elektromagnetischer Aktuator verwendet, der zumindest einen aus Magnetspule und Magnetkern bestehenden Elektromagneten, sowie einen gegen den Elektromagneten beweglichen Magnetanker aufweist. Der Magnetanker ist dabei üblicherweise entweder als ein linear beweglicher Hub- oder Tauchanker oder als ein drehbar gelagerter Klappanker ausgebildet.

Damit die Signalisierung haptisch erkennbar wird, muss der Magnetanker auf geeignete Weise mit der Betätigungsfläche gekoppelt sein, etwa durch eine starre oder eine elastische mechanische Verbindung oder durch eine direkte benachbarte Anordnung, durch die der Magnetanker bei einer Auslenkung auf die Betätigungsfläche einwirkt.

Bedienanordnungen mit einem elektromagnetischen Feedback-Aktuator sind in verschiedenen Ausführungen bekannt. So beschreibt beispielsweise die deutsche Offenlegungsschrift DE 10 2009 007 243 A1 eine haptische Bedieneinrichtung mit einem elektromagnetischen Feedback-Aktuator. Durch eine Berührung des Tastbereichs eines Tastfelds ist ein Schaltsignal auslösbar und das Tastfeld durch einen mit dem Tastfeld gekoppelten Magnetbewegungsantrieb in der Ebene des Tastfelds in einem bestimmten Rhythmus bewegbar. Der Magnetbewegungsantrieb weist einen Klappankermagneten mit einem von einer Spule umschlossenen Eisenkern und einer um eine Schwenkachse schwenkbar gelagerten Ankerplatte auf.

DE 11 2013 003 425 zeigt einen Feedback-Aktuator gemäß dem Oberbegriff von Anspruch 1.

In vielen Fällen ist der Feedback-Aktuator an die Form des jeweiligen Bedienelements angepasst. Bisher nicht zufriedenstellend gelöst ist das Problem, einen elektromagnetischen Aktuator speziell für eine haptische Signalisierung zu schaffen, der vielfältig verwendbar ist, und der sich durch einen besonders einfachen Aufbau und eine kostengünstige Herstellung auszeichnet, und der hinsichtlich seiner Kraft und Größe einfach skalierbar ist, so dass er in verschiedenen Baugrößen und insbesondere auch besonders kleinbauend hergestellt werden kann.

Es stellt sich daher die Aufgabe, einen Feedback-Aktuator mit den vorstehend genannten Eigenschaften zu schaffen.

Diese Aufgabe wird erfindungsgemäß dadurch gelöst, dass der Elektromagnet an einem Metallkörper angeordnet ist, der einteilig zugleich den Magnetanker, ein Magnetjoch und einen Halter für den Elektromagneten ausbildet.

Der erfindungsgemäße Feedback-Aktuator zeichnet sich damit durch einen sehr einfachen Aufbau aus, da er außer dem Elektromagneten nur noch aus einem weiteren Teil, nämlich dem Metallkörper besteht. Auf die Montage und Justierung mechanischer Drehlager, separater Federelemente oder ähnlichem kann verzichtet werden.

Weitere vorteilhafte Eigenschaften des erfindungsgemäßen Feedback-Aktuators sind eine hohe Steifigkeit im unbelasteten Zustand, ein geringer Bauraumbedarf, eine geringe elektrische Leistungsaufnahme, sowie eine geringe Streuung der Aktuatorkräfte.

Der Metallkörper kann auf sehr einfache und kostengünstige Weise als ein Stanzbiegeteil gefertigt werden.

Elektrische beziehungsweise magnetische Eigenschaften des Feedback-Aktuators, wie etwa das Anzugsmoment, können vorteilhafterweise durch einfaches Zurechtbiegen des Metallkörpers einjustiert werden. Eine solche Justierung kann vorteilhaft bei der Montage des Magnetkerns an den Metallkörper vorgesehen werden.

Bei einer Anordnung, die mindestens einen elektromagnetischen Feedback-Aktuator aufweist, kann die federnde Ankerplatte vorteilhaft zugleich einen Bestandteil eines kapazitiven oder induktiven Sensors ausbilden.

Im Folgenden soll die Erfindung anhand der Zeichnung dargestellt und näher erläutert werden. Es zeigen
- Figur 1: einen erfindungsgemäßen Feedback-Aktuator,
- Figur 2: einen Metallkörper als Einzelteil,
- Figur 3: einen Elektromagneten als Einzelteil,
- Figur 4: eine schematisch dargestellte Anordnung mit einem Feedback-Aktuator und einem Bedienelement,
- Figur 5: eine schematisch dargestellte Anordnung mit zwei Feedback-Aktuatoren und einem Bedienelement.

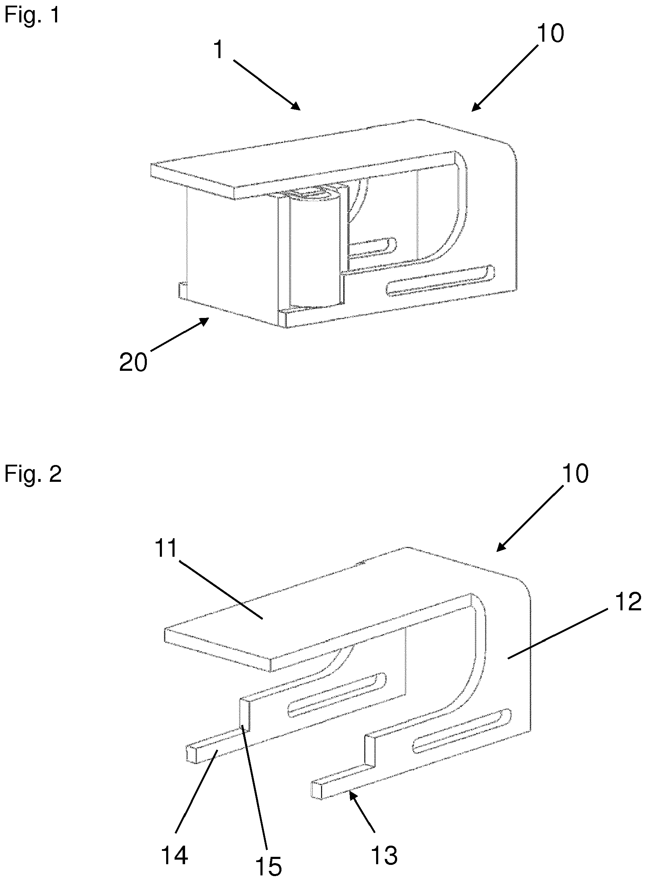

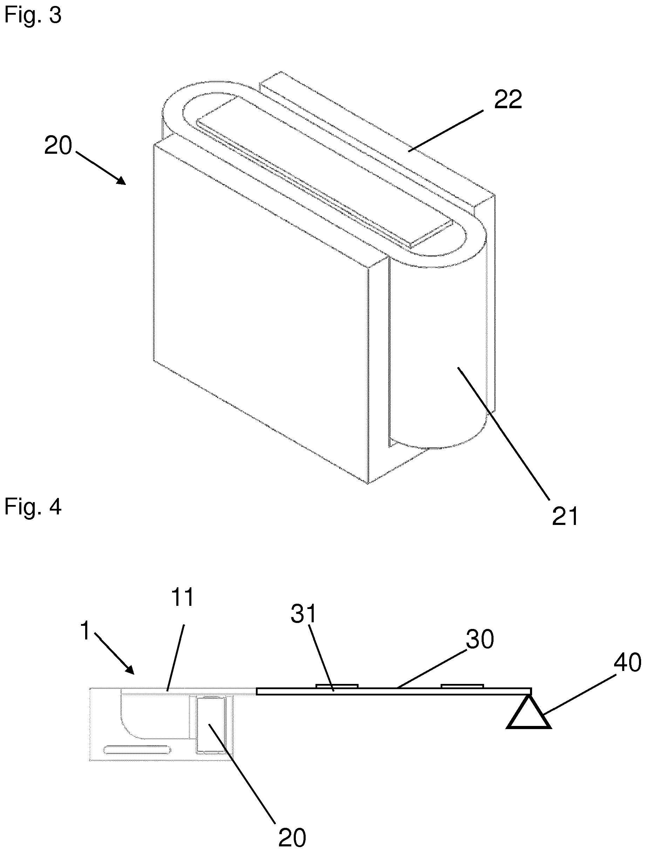

Die Figur 1 zeigt einen erfindungsgemäß ausgeführten Feedback-Aktuator 1. Er besteht neben einem Elektromagneten 20, der als Einzelteil in der Figur 3 dargestellt ist, aus einem einstückig ausgebildeten Metallkörper 10, den die Figur 2 als Einzelteil zeigt.

Der Elektromagnet 20 besteht hier aus einer ovalen Magnetspule 21, in die der mittlere Schenkel eines E-förmigen Magnetkerns 22 eingesetzt ist und die an ihren Längsseiten von den beiden äußeren Schenkeln des E-förmigen Magnetkerns 22 umfasst wird. Die ovale Form der Magnetspule 21, die sich eng an den E-förmigen Magnetkern 22 anfügt, ermöglicht den Aufbau eines relativ starken und zugleich kompakt geformten Elektromagneten 20.

Der in der Figur 2 als Einzelteil dargestellte Metallkörper 10 ist einstückig, und vorzugsweise als Stanzbiegeteil geformt. Zur Herstellung des Metallkörpers 10 wird zunächst aus einem flachen Metallblech ein Formteil ausgestanzt, welches die Form einer schmalen rechteckförmigen Platte 11 aufweist, an deren Längsseiten zwei L-förmigen Seitenteile 12 angeformt sind. In einem folgenden Verfahrensschritt werden die L-förmigen Seitenteile 12 jeweils um 90° gegenüber der rechteckförmigen Platte 11 abgebogen, so dass sich die Seitenteile 12 schließlich parallel gegenüberstehen.

Die freien Endabschnitte der Seitenteile 12 laufen zu schmalen stiftförmigen Anformungen 14 aus, welche als Halter für den anzufügenden Elektromagneten 20 Halteabschnitte 13 ausbilden. Zwischen den Halteabschnitten 13 und den weiteren Abschnitten der Seitenteile 12 ist jeweils eine Stufe 15 ausgebildet, deren Vorhandensein das positionsgenaue Anfügen des Elektromagneten 20 unterstützt.

Der Metallkörper 10 besteht aus einem ferromagnetischen Material, so dass die mit dem Magnetkern 22 des Elektromagneten 20 verbundenen Seitenteile 12 magnetisch leitende Magnetjoche ausbilden. Die rechteckförmige Platte 11 ist mit einer Schmalseite, die im Vergleich zu ihrer Längserstreckung relativ kurz ist, einstückig mit den Seitenteilen 12 des Metallkörpers 10 verbunden. Dadurch ist die Platte 11 an ihrem freistehenden Abschnitt gegenüber dem Rest des Metallkörpers 10 ein Stück weit elastisch biegsam. Sie kann daher, unter der Voraussetzung eines nicht allzu großen Abstandes zum Magnetkern 22 des Elektromagneten 20, durch den Elektromagneten 20 magnetisch angezogen werden und sich, nach Wegfall der Bestromung des Elektromagneten 20, auch wieder elastisch in ihre Ausgangslage zurück bewegen.

Die rechteckförmige Platte 11 des Metallkörpers 10 erfüllt somit die Funktion eines beweglichen Magnetankers in Form einer Ankerplatte 11 und zwar vorteilhafterweise, ohne dass ein Schwenklager oder elastische Federelemente als eigenständige Bauteile vorgesehen oder montiert werden müssen. Dieses trägt wesentlich zum Erreichen eines besonders einfachen und kostengünstigen Aufbaus des Feedback-Aktuators 1 bei.

Zur Herstellung des Feedback-Aktuators 1 wird der Magnetkern 22 des Elektromagneten 20 mit dem Halteabschnitt 13 des Metallkörpers 10 durch Verkleben, Verschweißen, Verschrauben oder Vercrimpen verbunden.

Dabei kann bereits während des Verbindens der Abstand zwischen der offenen Seite des Magnetkerns 22 und der Ankerplatte 11 einjustiert werden. Der Luftspalt zwischen Magnetkern 22 und der Ankerplatte 11 kann aber auch danach noch durch ein Nachbiegen der Ankerplatte 11 gegen die Seitenteile 12 des Metallkörpers 10 eingestellt werden.

Die Figur 4 zeigt schematisch eine Anordnung mit einem erfindungsgemäßen Feedback-Aktuator 1. Die Anordnung weist ein flächiges Bedienelement 30 mit einer oder mehreren Berührflächen 31 auf. Zusammen mit einer hier nicht dargestellten elektronischen Sensorik bilden diese Berührflächen 31 Betätigungselemente zur Aktivierung von Bedienfunktionen aus. Das Bedienelement 30 kann real beispielsweise als ein Touchscreen ausgeführt sein.

Das Bedienelement 30 ist mit der Ankerplatte 11 eines Feedback-Aktuators 1 gekoppelt. Die Kopplung kann dabei, je nach Anforderung an die Haptik, entweder starr oder über ein hier nicht dargestelltes Koppelelement auch elastisch ausgebildet ein. Die der Kopplungsseite gegenüberliegende Seite des Bedienelements 30 ist beweglich, beispielsweise an einem Schwenklager 40 gelagert.

Die Berührung einer Berührfläche 31 wird durch eine hier nicht näher erläuterte Elektronik erfasst, die daraufhin den Elektromagneten 20 des Aktuators 1 ansteuert. Der Elektromagnet 20 zieht die Ankerplatte 11 einmal oder wiederholt an, was an der an die Ankerplatte 11 angekoppelten Bedienfläche 30 als Erschütterung oder Vibration haptisch erkennbar ist.

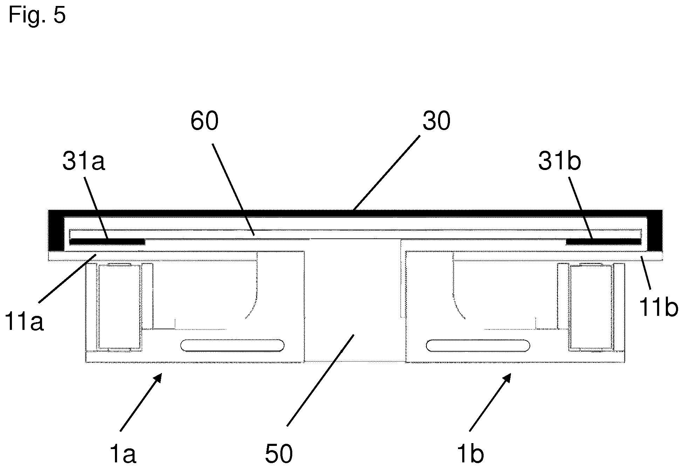

Da der hier beschriebene Feedback-Aktuator sowohl kleinbauend als auch kostengünstig hergestellt werden kann, ist es auch vorteilhaft möglich, bei einer Anordnung, die mehrere gleichartige oder auch verschiedene Bedienelemente aufweist, jedem Bedienelement einen eigenen Feedback-Aktuator zuzuordnen. Ein diesbezügliches Ausführungsbeispiel ist in der Figur 5 schematisch dargestellt.

Bei der in der Figur 5 dargestellten Anordnung sind zwei Feedback-Aktuatoren 1a, 1b seitlich an einem Sockel 50 derart montiert, dass die freien Endabschnitte ihrer Ankerplatten 11a, 11b sich in Richtung vom Sockel 50 weg erstrecken. Auf der Oberseite des Sockels 50 ist eine Leiterplatte 60 befestigt, die die Ankerplatten 11a, 11b beider Feedback-Aktuatoren 1a, 1b unter Ausbildung eines Zwischenraums fast vollständig überdeckt.

Auf der den Ankerplatten 11a, 11b zugewandten Seite der Leiterplatte 60 ist jeweils an deren Endabschnitten auf der Leiterplatte 60 eine Sensorfläche 31a, 31b aufgebracht, welche Abstandsänderungen zur jeweiligen Ankerplatte 11a, 11b auf kapazitivem oder induktivem Wege erfassen kann.

Mit den freien Enden der Ankerplatten 11a, 11b ist jeweils ein Randabschnitt eines flächenhaften Bedienelementes 30 gekoppelt. Bereits durch eine geringe Krafteinwirkung auf die Oberfläche des Bedienelements 30 kann eine vertikale Auslenkung einer Ankerplatte 11a, 11b bewirkt werden, die durch die zugehörige Sensorfläche 31a, 31b erfasst wird. Die von einer Sensorfläche 31a, 31b erfolgende elektrische Signalisierung wir durch eine hier nicht dargestellte Elektronik ausgewertet, die daraufhin eine vorgesehene Schaltfunktion auslöst. Darüber hinaus bestromt die Elektronik den Elektromagneten des zur ausgelenkten Ankerplatte 11a, 11b gehörenden Feedback-Aktuators 1a, 1b, so dass dessen Ankerplatte 11a, 11b vom Elektromagneten angezogen wird und der jeweilige Feedback-Aktuator 1a, 1b eine haptische Rückmeldung zur erfolgten Betätigung erzeugt.

Bei einer Krafteinwirkung in der Mitte des Bedienelements 30, also etwa oberhalb des Sockels 50, werden beide Ankerplatten 11a, 11b ungefähr gleichzeitig ausgelenkt, wodurch auch durch beide Feedback-Aktuatoren 1a, 1b zugleich eine haptische Rückmeldung erfolgt. Es ergeben sich somit für diese Anordnung insgesamt drei, auch haptisch gut unterscheidbare Betätigungsmöglichkeiten.

### Bezugszeichen

- 1, 1a, 1b: Feedback-Aktuator
- 10: Metallkörper
- 11, 11a, 11b: Ankerplatte (Magnetanker, rechteckförmige Platte)
- 12: Seitenteile (Magnetjoche)
- 13: Halteabschnitte (Halter)
- 14: stiftförmige Anformungen
- 15: Stufe
- 20: Elektromagnet
- 21: Magnetspule
- 22: Magnetkern
- 30: Bedienelement
- 31, 31a, 31b: Betätigungselemente (Berührflächen, Sensorflächen)
- 40: Schwenklager
- 50: Sockel
- 60: Leiterplatte

## Patentansprüche

1. Elektromagnetischer Feedback-Aktuator (1, 1a, 1b) für ein Bedienelement (30) mit mindestens einem Betätigungselement (31, 31a, 31b),
wobei der Feedback-Aktuator (1, 1a, 1b) zumindest einen aus einer Magnetspule (21) und einem Magnetkern (22) bestehenden Elektromagneten (20), sowie einen gegen den Elektromagneten (20) beweglichen Magnetanker (11, 11a, 11b) aufweist,
wobei der Magnetanker (11, 11a, 11b) mechanisch mit dem Bedienelement (30) koppelbar ist, um bei einer Berührung oder Druckbetätigung eines Betätigungselements (31, 31a, 31b) mindestens einen Kraftimpuls an das Bedienelement (30) zu geben,
**dadurch gekennzeichnet,**
**dass** der Elektromagnet (20) an einem Metallkörper (10) angeordnet ist, der einteilig zugleich den Magnetanker (11, 11a, 11b), ein Magnetjoch (12) und einen Halter (13) für den Elektromagneten (20) ausbildet.

2. Elektromagnetischer Feedback-Aktuator (1, 1a, 1b) nach Anspruch 1,
**dadurch gekennzeichnet, dass** der Magnetanker (11, 11a, 11b) durch einen plattenartigen Abschnitt des Metallkörpers (10) ausgebildet ist, der elastisch mit einem anderen Abschnitt des Metallkörpers (10) verbunden ist.

3. Elektromagnetischer Feedback-Aktuator (1, 1a, 1b) nach Anspruch 1,
**dadurch gekennzeichnet, dass** der Metallkörper (10) aus einem ferromagnetischen Material besteht.

4. Elektromagnetischer Feedback-Aktuator (1, 1a, 1b) nach Anspruch 1,
**dadurch gekennzeichnet, dass** der Metallkörper (10) als Stanzbiegeteil ausgebildet ist.

5. Anordnung mit mindestens einem elektromagnetischer Feedback-Aktuator (1, 1a, 1b) nach Anspruch 1, **dadurch gekennzeichnet, dass** der Magnetanker (11, 11a, 11b) des mindestens einen elektromagnetischen Feedback-Aktuators (1, 1a, 1b) mechanisch mit einem Bedienelement (30) gekoppelt ist.

6. Anordnung nach Anspruch 5, **dadurch gekennzeichnet, dass** das Bedienelement (30) Berührflächen (31) als Betätigungselemente aufweist.

7. Anordnung nach Anspruch 6, **dadurch gekennzeichnet, dass** das Bedienelement (30) als ein Touchscreen ausgebildet ist.

8. Anordnung nach Anspruch 5, **dadurch gekennzeichnet, dass** der Magnetanker (11, 11a, 11b) einen Teil eines kapazitiven oder induktiven Sensors ausbildet.

## Claims

1. An electromagnetic feedback actuator (1, 1a, 1b) for an operating element (30) with at least one actuating element (31, 31a, 31b), where the feedback actuator (1, 1a, 1b) has at least one electromagnet (20) made up of a magnetic coil (21) and a magnetic core (22), as well as an armature (11, 11a, 11b) which moves across the electromagnet (20) and in which the magnet armature (11, 11a, 11b) can be coupled mechanically to the operating element (30) so that, if an actuator element (31, 31a, 31b) is touched or pressed, at least one force impulse is issued to the operating element (30),
**characterised by the fact that**
the electromagnet (20) is attached to a one-piece metal body (10) which forms the magnet armature (11, 11a, 11b), a magnet yoke (12) and a retainer (13) for the electromagnet (20).

2. An electromagnetic feedback actuator (1, 1a, 1b) as in Claim 1, **characterised by** the fact that the magnet armature (11, 11a, 11b) is formed by a plate-shaped cut-out in the metal body (10) and is connected in an elastic manner to another cut-out in the metal body (10).

3. An electromagnetic feedback actuator (1, 1a, 1b) as in Claim 1, **characterised by** the fact that the metal body (10) is made in a ferro-magnetic material.

4. An electromagnetic feedback actuator (1, 1a, 1b) as in Claim 1, **characterised by** the fact that the metal body (10) is a stamped, formed part.

5. An arrangement with at least one electromagnetic feedback actuator (1, 1a, 1b) **characterised by** the fact that the magnet armature (11, 11a, 11b) of the at least one electromagnetic feedback actuator (1, 1a, 1b) is attached mechanically to an operating element (30).

6. An arrangement as in Claim 5, **characterised by** the fact that the operating element (30) has tactile surfaces (31) as actuator elements.

7. An arrangement as in Claim 6, **characterised by** the fact that the operating element (30) is formed as a touch-screen.

8. An arrangement as in Claim 5, **characterised by** the fact that the magnet armature (11, 11a, 11b) forms part of a capacitive or inductive sensor.

## Revendications

1. Actionneur électromagnétique à rétroréaction (1, 1a, 1b) pour un élément de commande (30) comprenant au moins un élément d'actionnement (31, 31a, 31b), sachant que l'actionneur à rétroréaction (1, 1a, 1b) présente au moins un électroaimant (20), composé d'une bobine magnétique (21) et d'un noyau magnétique (22), ainsi qu'un induit magnétique (11, 11a, 11b), qui peut être déplacé par rapport à l'électroaimant (20), sachant que l'induit magnétique (11, 11a, 11b) peut être couplé mécaniquement avec l'élément de commande (30) afin de donner au moins une impulsion à l'élément de commande (30) lors d'un actionnement par effleurement ou par pression d'un élément d'actionnement (31, 31a, 31b), **caractérisé en ce que** l'électroaimant (20) est disposé sur un corps d'aimant (10) qui forme simultanément, d'une seule pièce, l'induit magnétique (11, 11a, 11b), une culasse magnétique (12) et un support (13) pour l'électroaimant (20).

2. Actionneur électromagnétique à rétroréaction (1, 1a, 1b) selon la revendication 1, **caractérisé en ce que** l'induit magnétique (11, 11a, 11b) est formé par une partie, genre plaque, du corps d'aimant (10), laquelle est reliée élastiquement à une autre partie du corps d'aimant (10).

3. Actionneur électromagnétique à rétroréaction (1, 1a, 1b) selon la revendication 1, **caractérisé en ce que** le corps d'aimant (10) consiste en un matériau ferromagnétique.

4. Actionneur électromagnétique à rétroréaction (1, 1a, 1b) selon la revendication 1, **caractérisé en ce que** le corps d'aimant (10) est réalisé en tant que pièce pliée et découpée.

5. Ensemble avec au moins un actionneur électromagnétique à rétroréaction (1, 1a, 1b) selon la revendication 1, **caractérisé en ce que** l'induit magnétique (11, 11a, 11b) de l'au moins un actionneur électromagnétique à rétroréaction (1, 1a, 1b) est couplé mécaniquement avec un élément de commande (30)

6. Ensemble selon la revendication 5, **caractérisé en ce que** l'élément de commande (30) présente des surfaces d'effleurement (31) en tant qu'éléments d'actionnement.

7. Ensemble selon la revendication 6, **caractérisé en ce que** l'élément de commande (30) est réalisé sous la forme d'un écran tactile.

8. Ensemble selon la revendication 5, **caractérisé en ce que** l'induit magnétique (11, 11a, 11b) forme une partie d'un capteur capacitif ou inductif.
